# EUROPEAN PATENT APPLICATION

(11) **EP 2 706 074 A1**
(43) Date of publication of application: **12.03.2014**
(21) Application number: 12006334.2
(22) Date of filing: 07.09.2012
(51) Int. Cl.: C08G 18/12, C08G 18/76, C08G 101/00

(54) **Low monomer polyurethane compositions for aerosol containers**

(71) Applicant: Den Braven Beheer B.V., 4903 RC Oosterhout (NL)
(72) Inventor: Muntean, Viorica, Dipl.-Ing., 2000 Stockerau (AT); Lindner, Peter, Dipl.-Chem., 01936 Königsbrück (DE)
(74) Representative: Klooster, Jan Hanri

(57) **Abstract**

The invention relates to a polyurethane composition for use in aerosol containers, comprising a prepolymer based on toluene diisocyanates (TDI), said compositions having a low content of iscyanate monomer, the content of free monomeric TDI not being more than 0.1 wt%. The composition comprises a TDI prepolymer having a NCO content of greater than 10%. The invention also relates to the use of the polyurethane compositions for the production of one- or two-component adhesives/sealants/foams, or for hot melt adhesives and solvent-less or solvent-containing laminating adhesives, or for assembly foams, potting compounds and rigid, flexible and integral foams.

## Description

The present invention relates to polyurethane compositions for use in aerosol containers, comprising a prepolymer based on toluene diisocyanates (TDI), said compositions having a low content of isocyanate monomer.

Polyurethane compositions can be used in many technical areas. One important area of application for polyurethanes is e.g. adhesives, sealants and one- or two-component foams from aerosol containers. Foams In aerosol cans are used in construction to Insulate windows and doorframes, gaps, roof surfaces, pipes, or as adhesive for styropor plates for insulating works of building walls. Other applications are: insulation of machines to avoid vibration and filling of cavities generally.

The polyurethane compositions for these applications are based on polyurethane (PU) prepolymers, which contain reactive isocyanate (NCO) groups. In order to obtain PU prepolymers having reactive NCO-groups, polyols are reacted with an excess of monomeric (or polymeric) isocyanates generally at least predominantly diisocyanates. The reactive NCO-groups, in particular, are capable of reacting with water or other compounds which contain an acidic hydrogen atom. This form of reactivity enables the reactive PU prepolymers to cure by the addition of water or other compounds containing an acidic hydrogen atom (known in this case as hardeners).
With these so-called two-component systems, the hardener is generally added immediately before application, only a limited processing time being available to the user after addition of the hardener.
However, polyurethanes containing reactive NCO-groups can also be cured without the addition of hardeners, i.e. solely by reaction with atmospheric moisture (one-component systems). One-component systems generally have the advantage over two-component systems that mixing of the hardener into the PU prepolymers by the user before application is not necessary.

The polyurethane compositions additionally may contain a catalyst, a blowing agent or propellant, and additives such as a flame retardant, a surfactant, a cell-opener, plasticisers, surfactants, pigments, dyes, fillers, or other components. By varying the type of Isocyanate and polyol and of the additives, a wide variety of products like foams can be produced having different densities, rigidity, viscosity and (cell) structures. Commonly PU prepolymers used are based on diphenyl-methane diisocyanate (MDI) or TDI.

Some of the disadvantages commonly associated with the known TDI and MDI based isocyanate prepolymers are potential industrial hygiene issues related to the high vapour pressure caused by large quantities of free monomeric TDI and MDI. The presence of volatile monomeric TDI and MDI diisocyanate is problematical, because even at room temperature, these volatile diisocyanates have a significant vapour pressure. This significant vapour pressure is a problem when using spray application because significant quantities of (di)isocyanate vapors will fill the surrounding air. Isocyanate vapours are toxic so that the user must protect itself from breathing monomeric isocyanate present in the foaming mixture and in the ambient air. The use of products with a high content of readily volatile diisocyanates therefore involves elaborate measures on the part of the user to protect the people applying the product.

Furthermore the free monomeric diisocyanates present in the PU foam or other PU product are capable of "migrating", for example, within the foam or adhesive or, in some cases, even into adjacent materials or into the air. Such migrating constituents are frequently known among experts as "migrates". By contact with moisture, the NCO groups of the migrates are reacted to amino groups, forming di- and polyamines. Migrates are undesirable in the packaging industry and particularly in the packaging of foods. The passage of the migrates through the packaging material can lead to contamination of the packaged product; moreover, long waiting times are necessary before the packaging material is "migrate-free" and can be used.

TDI based prepolymers are particularly desirable as these exhibit lower viscosities and better storage stability (shelf life) in comparison to other commercially available aromatic diisocyanates like MDI. However up till now a one-component foam solely based on TDI having a low monomer content and being able to provide good (foam) product properties is not available. Reducing the concentration of free TDI monomer by e.g. a costly thin film evaporation process results in an undesired higher viscosity product. Due to the slow reactivity of TDI vs MDI, curing time of a TDI based product is too long compared to MDI products. Furthermore prepolymers prepared by reacting a polyol with a mixture of TDI and MDI are also not appropriate, because of the high concentration of free TDI monomer and because of the high (initial) viscosity.

The preparation of low-monomer to virtually monomer-free NCO prepolymers is highly desirable in the case of TDI because of the high vapour pressure of monomeric TDI so that the polymers formed will contain unreacted TDI and constitute a high health risk. The NCO prepolymers based on aliphatic diisocyanates, such as, for example, hexamethylene diisocyanate (HDI) or isophorone diisocyanate (IPDI), are to be regarded as even more critical in this respect. The health risk of (2-ring) MDI is lower because of its lower vapour pressure as compared with (1-ring) TDI.

Commercial one-component systems for producing PU foam from pressurized aerosol containers or canisters (OCF One-Component Foam) typically contain predominantly MDI or crude MDI, or a mixture of MDI and PMDI (poly-MDI; a mixture of 2-ring, 3-ring, 4-ring, 5-ring and higher ring MDI). EP2383304 discloses an OCF composition containing less than 1% monomeric MDI by adding a crude TDI or end-capped TDI prepolymer to crude MDI resulting in a composition containing about 40% MDI and 14% TDI.

According to US5925781 a liquid, homogeneous TDI/polyether/PMDI prepolymer can be obtained having an NCO content of from 2 to 16%, a viscosity of about 10,000 mPa.s or less at room temperature, and which contains about 1.0% or less free monomeric TDI. These prepolymers are prepared by mixing A) a TDI reactive NCO-groups prepolymer having a low NCO content of about 3% with B) a liquid polyisocyanate of MDI having a high NCO content of 20% or more to form a blend, and reacting this blend with C) at least one alcohol or polyol having a number average molecular weight of about 32 or greater, This product has a low free monomeric TDI content of about 0.3% or less, but the final NCO content is provided by the added MDI, giving rise to additional free monomeric MDI.

EP1518874 describes an OCF composition having a low monomer content, which is obtained from a specific mixture of PMDI, followed by removal of the monomeric isocyanate by distillation.

WO03/051951 describes polyurethane prepolymers, produced by reacting polyisocyanates with polyols in a first and second synthesis stage, suitable for the production of rigid, flexible and integral foams and in sealants.
The NCO content of the polyurethane prepolymer produced by reacting TDI in two stages with polyether polyol is in the range from 3,5 - 4,8% by weight, having a residual TDI monomer content of 0.03 - 0.55% by weight.

In EP2208743 one-component polyurethane compositions are described comprising Desmodur® monomeric and polymeric MDI polyurethane prepolymers, having a content of unreacted monomeric isocyanates of less than 5 wt%. The prepolymers are obtained by distilling the product at elevated temperatures and low pressure using a short-path evaporator.

Despite the aforementioned prior art relating to the use of diisocyanates having low content of monomer, there is still a need for reactive polyurethane compositions based on TDI which enable providing PU products, such as PU foams, comprising very small amounts (< 0.1 wt%) of free low molecular weight diisocyanates, but having good product and handling properties, such as optimal viscosities before and after curing, good storage stability and good product parameters such as compression/pressure strength, gap and dimensional stability, and short curing time of the PU foam produced. The reactive compositions should be suitable for use as one- and two-component foams, adhesives, sealants, particularly as one-component foams, and for the production of encapsulating compounds, bonding foams and flexible, rigid and integral foams.

Object of the invention is achieved by providing a polyurethane composition comprising a toluene diisocyanates (TDI) prepolymer having a low content of monomer and having a NCO content of greater than 10%.

The composition of the present invention comprises a TDI prepolymer based on polyols and TDI, which combines the properties of a low TDI monomer content with a NCO content from 10 to 15%. This composition has very good storage stability, in particular for one-component PU aerosol systems for producing foams. Although the monomer content is low, it is possible with the composition according to the invention to obtain PU foam products having a short curing time, good (initial) viscosity, good gap and dimensional stability, hardness, and pressure or compression strength.

Preferably the NCO content of the TDI prepolymer is from 10 - 15%, more preferably from 10 - 13%. It has been surprisingly found that the use of low monomer TDI prepolymers having reactive NCO-groups between 10 and 1.5% addresses all the disadvantages of the prior art.

In particular the amount of TDI prepolymer is from 50 - 100 wt% of the total amount of TDI in the polyurethane composition and the content of free monomeric TDI is not more than 0.1 wt%. The composition of the invention may be obtained by adding TDI prepolymers having a low monomer content or may be obtained by mixing two or more TDI prepolymers having a low monomer content <0,1 %. The TDI prepolymers used may have different compositions or properties, but it is essential that each TDI-prepolymer added to the composition has a reactive NCO content of greater than 10% and a isocyanate monomer content <0,1 %. The two or more TDI-prepolymers may be (pre)mixed and subsequently added as a prepolymer mixture to the composition, but the different TDI-prepolymers may also be simultaneously or consecutively mixed with the other components of the composition for use in aerosol containers.

A preferred composition comprises a solvent between 0.1 and 50 wt%, wherein the solvent is preferably selected from the group of: ketones such as acetone, propylene carbonate, ethylene carbonate like Jeffsol PC of Huntsman, acetate esters such as ethyl acetate, n-butyl acetate, isobutyl acetate, and propyl acetate, Methylal, Solkane 365/227 (foaming agent, mixture of hydrofluorcarbons pentafluorobutane & heptafluoropropane) and mixtures thereof. The solvent may be contained partially or completely within the TDI prepolymer, but may also be partially or completely added to the composition.

In particular the composition comprises an alcohol or polyalcohol between 0.1 and 10 wt%. Preferably the alcohol is selected from the group of: monoethylene glycol (MEG), diethylene glycol (DEG), propylene glycol, 1,3-propylene glycol, 1,3-butane diol, 1,4-butane diol, neopentyl glycol, polyols having hydroxyl numbers between 35 and 400 (mg KOH / g polyol), and mixtures thereof. Additional to the polyalcohols or polyols contained in the TDI prepolymer preferably alcohol or polyalcohol is added to the PU composition.

A preferred composition comprises one or more additives from the group of: catalysts, surfactants, cell openers, flame-retardants, plasticisers, and propellants.

Preferably the catalyst is selected from the group of: Lewis bases or acids, dimethyl aminoethoxyethanol (DMEE), di-morpholino diethyl ether (DMDEE), or mixtures thereof, and preferably the flame-retardant is selected from the group of: monochlorinated mono-methyl ester of castor oil, triethyl phosphate TEP-Z, tris (1-chlor-2-propyl) phosphate (TCPP), bromine comprising flame-retardants like bromine aliphatic polyether diol.

Preferably the surfactant is selected from the group of: polyether modified polysifoxanes, and preferably the cell opener is selected from the group of: polybutenes, fluorpolymers preferably polytetrafluoroethylene (PTFE), SAN polyols containing styrene acrylonitril such as Arcol Polyol 1255, and preferably the plasticiser is selected from the group of: chlorinated paraffins, phosphates.

Preferably comprising a surfactant selected from the group polyether modified polysiloxanes, and/or a cell opener selected from the group: polybutenes, fluorpolymers preferably polytetrafluoroethylene (PTFE), and/or a plasticiser selected from the group: chlorinated paraffins, phosphates.

Preferably the propellant is selected from the group of: propane, butane, isobutane, dimethylether (DME), 1,1-Difluoroethane, 1,1,1,2-tetrafluoroethane, CO₂, N₂O.

The invention also relates to the use of the polyurethane compositions produced for the production of one- or two-component adhesives/sealants/foams, or for hot melt adhesives and solvent-less or solvent-containing laminating adhesives, or for assembly foams, potting compounds and rigid, flexible and integral foams.

### Detailed description of the invention

An important issue for one-component compositions is the viscosity of the mixture in the pressurized container. For this reason free monomeric diisocyanate (MDI) is often used in relatively large quantities, because it is both a convenient source of reactive NCO groups and a good solvent for the NCO containing prepolymers. Reducing the amount of free monomeric diisocyanate (MDI) yields a mixture having a viscosity being too high to be able to be easily dispensed from a pressurized container, such as an aerosol canister. Therefore in the prior art an excess amount of diisocyanate (MDI) is usually applied, followed by removing this excess free monomeric dllsocyanate, e.g. by distillation, and introducing a solvent, e.g. dimethyl ether, to compensate for the removed monomeric diisocyanate (MDI).

The present invention avoids this complex route to reduce the amount of free monomeric diisocyanate present in the composition by using volatile 1-ring TDI prepolymer having a low monomer content and having a high, between 10 and 15%, NCO content. Surprisingly these compositions yield foams not excessively brittle or hard, but foams having a good initial viscosity, a short curing time and low compression/pressure strength such as Flexfoams, while exhibiting a good storage stability or shelf life. Cured foams produced using the compositions according to the invention have a good dimensional stability, hardness and gap stability.

The compositions according to the invention based on TDI prepolymers with monomer content < 0,1 % and NCO content between 10 and 15%, surprisingly have the same reactivity and curing parameters as foams based on MDI prepolymers.
The curing parameters such as tack-free time, cutting time, curing time of the TDI compositions according to the invention are comparable to the parameters of the foams based on MDI Prepolymers.

The PU compositions that are suitable according to the invention are produced starting from reactive NCO-group containing TDI prepolymers, optionally mixed with a propellant, alcohol, and additives. Examples of suitable 1-ring aromatic diisocyanates for use in the PU composition and/or TDI prepolymer are all isomers of toluene diisocyanate (TDI) either in the form of the pure isomer or as a mixture of several isomers, and 1,3-phenylene diisocyanate.
A preferred embodiment of the invention is characterized by the use of suitable TDI prepolymers, like for example, Airthane PHP-80D or Polurgreen AD-01.

The conventional (poly)alcohol compounds known to the person skilled in the art are to be used as alcohols in de PU composition according to the invention. Within the framework of the invention, a wide variety of polyfunctional alcohols may be used. These should have 2 to 10, particularly from 2 to 4 OH groups per molecule. They can be low molecular weight compounds or OH-functional polymers having hydroxyl numbers between 35 - 400 (mg KOH / g polyol). However, it is necessary that these compounds do not contain any other functional groups that are reactive with NCO groups. The compounds with multiple OH groups can be those that have exclusively terminal OH groups, or they can be compounds that (also) have lateral OH groups distributed along the chain. The OH groups in question are, in any case, those which can react with NCO-groups. They can be primary, secondary or tertiary OH groups, but primary or secondary OH groups are preferred. Examples of suitable compounds of this type are polyols based on polyethers, polyesters or polyalkylenes, which can be liquid, amorphous or crystalline, such as monoethylene glycol (MEG), diethylene glycol (DEG), propylene glycol, 1,3-propylene glycol, 1,3-butane diol, 1,4-butane diol, neopentyl glycol, polyols having hydroxyl numbers between 35 and 400 (mg KOH / g polyol) such as Voranol RH 360, and mixtures thereof.

Any propellant known in the art for producing PU foam can be used in the present invention, provided it is compatible with the NCO-prepolymers. Preferred propellants are propane, butane, isobutane, dimethyl ether (DME), 1,1-Difluoroethane, 1,1,1,2-tetrafluoroethane, carbon dioxide (CO₂), nitrous oxide (N₂O) and mixtures thereof, and are preferably present in an amount of 5 to 25 wt%, more preferably 10 to 20 wt%.

In compositions for producing foams a catalyst is used and any catalyst and co-catalyst traditionally used in one-component PU compositions may be used. Besides the traditional tin based catalysts (e.g., stannous octoate), excellent results were obtained with Lewis bases or acids, dimethyl aminoethoxyethanol (DMEE), di-morpholino diethyl ether (DMDEE), or mixtures thereof. In most applications, a flame retardant is required, which can be selected from the group of: monochlorinated mono-methyl ester of castor oil, triethyl phosphate TEP-Z, tris (1-chlor-2-propyl) phosphate (TCPP), bromine comprising flame-retardants like bromine aliphatic polyether diol. A surfactant may be selected from polyether modified polysiloxanes, Tegostab B 8951, Tegostab B 8870, RC 330, and a cell opener may be selected from polybutenes, Niax L 6164, fluorpolymers preferably polytetrafluoroethylene (PTFE), and wherein the plasticiser is selected from the group of: chlorinated paraffins, phosphates. Any filler, pigment, colorant or dye may be used and the compositions of the present invention are not restricted thereto.

### Examples

In examples 1 - 4 the composition is prepared by filling an OCF-canister with all compounds or their mixture, pressurizing with propellant(s), mixing of the contents by shaking of the canister.
In example 5 the composition is prepared by adding all compounds of components A & B or their mixture in separate holders in a TCF-canister, pressurizing with propellant(s) and mixing the content of the canister by shaking.
The conditions of the test are: ambient temperature and temperature of canister about 23 °C, relative humidity about 30 %.

### Example 1 Composition for OCF

| Type | compound | Amount wt% |
|---|---|---|
| NCO | TDI prepolymer I | 49.15 |
| | NCO 10.6% Ethyl acetate 0% | |
| | Free TDI monomer < 0.1 % | |
| NCO | TDI prepolymer II | 26.56 |
| | NCO 13% Ethyl acetate 25% | |
| | Free TDI monomer < 0.1 % | |
| Alcohol | diethylene glycol (DEG) | 0.36 |
| Flame retardant | TCPP | 1.08 |
| Surfactant | RC 330 | 0.55 |
| Cell opener | Niax L 6164 | 1.08 |
| Solvent | acetone | 1.44 |
| Catalyst | DMDEE | 1.01 |
| | | |
| Propellant | isobutane | 5.41 |
| | 1,1-difluoroethane (152 a) | 13.35 |
| Total | | 99.57 |
| Properties of cured foam: | | |
| Tack free time dry/wet | 17/16 (min.) | |
| Cutting time | 90/50 (min.) | |
| Curing time | 120/100 (min.) | |
| Density | 18 ± 1 (g/cm³) | |
| Dimensional stability dry/wet | -1,2/-5,1 (%) | |
| Structure, wet | mid-sized cells | |
| Adding Niax L6164 cell opener results in a foam having a mid-sized cell structure and a density of 18 g/cm³. | | |

### Example 2 Composition for OCF

| Type | compound | Amount wt% |
|---|---|---|
| NCO | TDI prepolymer I | 50.13 |
| | NCO 10.6% Ethyl acetate 0% | |
| | Free TDI monomer < 0. 1% | |
| NCO | TDI prepolymer II | 26.54 |
| | NCO 13% Ethyl acetate 25% | |
| | Free TDI monomer < 0.1 % | |
| Alcohol | diethylene glycol (DEG) | 0.38 |
| Flame retardant | TCPP | 1.88 |
| Surfactant | RC 330 | 0.78 |
| Cell opener | PTFE | 0.31 |
| Solvent | acetone | 0 |
| Catalyst | DMDEE | 1.00 |
| | | |
| Propellant | isobutane | 5.35 |
| | 1,1-difluoroethane (152 a) | 13.21 |
| Total | | 99.57 |
| Properties of cured foam: | | |
| Tack free time dry/wet | 17/15 (min.) | |
| Cutting time | 90/40 (min.) | |
| Curing time | 180/80 (min.) | |
| Density | 18 ± 1 (g/cm³) | |
| Dimensional stability dry/wet | -1,2/-5,1 (%) | |
| Structure, wet | very fine cells | |
| Adding PTFE cell opener results in a foam having a very fine cell structure and a density of 18 g/cm³. PTFE is a better cell opener than Niax 6164L for TDI prepolymer based PU foam compositions. | | |

### Example 3 Composition for OCF

| Type | compound | Amount wt% |
|---|---|---|
| NCO | TDI prepolymer I | 69.66 |
| | NCO 10.3% Ethyl acetate 0% | |
| | Free TDI monomer < 0.1 % | |
| Alcohol | Voranol RH 360 | 2.33 |
| Flame retardant | TCPP | 0 |
| Surfactant | Tegostab B 8951 | 1.29 |
| Cell opener | PTFE | 0.45 |
| Solvent | Metylal | 4.86 |
| | Solkane 365/227 | 3.85 |
| Catalyst | DMDEE | 0.49 |
| Co-catalyst | Ethacure 100 | 0.06 |
| | | |
| Propellant | propane | 2.46 |
| | isobutane | 9.72 |
| | dimethyl ether (DME) | 4.92 |
| Total | | 100.09 |
| Properties of cured foam: | | |
| Tack free time dry/wet | 42/40 (min.) | |
| Cutting time | 120/80 (min.) | |
| Curing time | 180/80 (min.) | |
| Density | 19 ± 1 (g/cm³) | |
| Dimensional stability dry/wet | -5/-8 (%) | |
| Structure, wet | mid-sized cells | |
| The foam produced with this composition is a soft, not semi-rigid, foam having a low compression strength value, compared to Examples 1, 2 and standard MDI-OCF. | | |

### Example 4 Composition for OCF

| Type | compound | Amount wt% |
|---|---|---|
| NCO | TDI prepolymer I | 51.6 |
| | NCO 10.6% Ethyl acetate 0% | |
| | Free TDI monomer < 0.1 % | |
| NCO | TDI prepolymer II | 21.2 |
| | NCO 13% Ethyl acetate 25% | |
| | Free TDI monomer < 0.1 % | |
| Alcohol | Voranol RH 360 | 4.19 |
| Flame retardant | TCPP | 0 |
| Surfactant | Tegostab B 8951 | 0 |
| | RC 330 | 0.73 |
| Cell opener | PTFE | 0.35 |
| Solvent | Acetone | 2.09 |
| | Metylal | 0 |
| Catalyst | DMDEE | 0.70 |
| Co-catalyst | Ethacure 100 | 0 |
| | | |
| Propellant | propane | 1.75 |
| | isobutane | 5.23 |
| | dimethyl ether (DME) | 12.21 |
| Total | | 100.04 |
| Properties of cured foam: | | |
| Tack free time dry/wet | 22/20 (min.) | |
| Cutting time | 100/60 (min.) | |
| Curing time | 240/150 (min.) | |
| Density | 20 ± 1 (g/cm³) | |
| Dimensional stability dry/wet | -2,1/-5,0 (%) | |
| Structure, wet | fine cells | |
| Adding a polyol with a high hydroxyl number (Voranol RH360) did not result in an improvement of the compression strength. The viscosity of the foam is higher and the shelf life shorter. | | |

### Example 5 Composition for two-component foam

| Type | compound | Amount wt% |
|---|---|---|
| | Component A | |
| NCO | TDI prepolymer I | 63.14 |
| | NCO 10.6% Ethyl acetate 0% | |
| | Free TDI monomer < 0.1 % | |
| Alcohol | Voranol RH 360 | 0 |
| Flame retardant | TCPP | 0 |
| Surfactant | Tegostab B 8870 | 0.42 |
| Cell opener | PTFE | 0.53 |
| | Desmophen 1255 SAN Polyol | 8.09 |
| Solvent | Metylal | 0 |
| Catalyst | DMDEE | 0.42 |
| Propellant | propane | 3.19 |
| | isobutane | 10.3 |
| | dimethyl ether (DME) | 5.33 |
| Component B Hardener | | |
| Catalyst | DMDEE | 0.42 |
| | DETDA | 1.29 |
| Alcohol | Diethylene glycol (DEG) | 0.11 |
| | Polyol OH 400 | 3.33 |
| Flame retardant | TCPP | 3.51 |
| Total | | 100.07 |
| Properties of cured foam: | | |
| Tack free time dry/wet | 30/25 (min.) | |
| Cutting time | 120/80 (min.) | |
| Curing time | 240/150 (min.) | |
| Density | 20 ± 1 (g/cm³) | |
| Dimensional stability dry/wet | -2,1/-5,0 (%) | |
| Structure, wet | mid-sized cells | |
| Applying time after mixing components A & B: 8 - 10 min. | | |

## Claims

1. Polyurethane composition for use in aerosol containers, comprising a prepolymer based on toluene diisocyanates (TDI), said composition having a low content of isocyanate monomer, **characterised in that** the composition comprises a TDI prepolymer having a NCO content of greater than 10%.

2. Polyurethane composition according to claim 1, wherein the NCO content of the TDI prepolymer is from 10 - 15%, preferably from 10 - 13%.

3. Polyurethane composition according to claim 1 - 2, wherein the amount of TDI prepolymer is from 50 - 100 wt% of the total amount of TDI.

4. Polyurethane composition according to any of the preceding claims, wherein the content of free monomeric TDI is not more than 0.1 wt%.

5. Polyurethane composition according to according to any of the preceding claims, comprising a solvent between 0.1 and 50 wt%.

6. Polyurethane composition according to claim 5, wherein the solvent is selected from the group of: ketones, propylene carbonate, ethylene carbonate, acetate esters such as ethyl acetate, n-butyl acetate, isobutyl acetate, and propyl acetate, methylal, hydrofluorcarbons such as pentafluorobutane, heptafluoropropane or mixtures thereof.

7. Polyurethane composition according to according to any of the preceding claims, comprising an alcohol or polyalcohol between 0.1 and 10 wt%.

8. Polyurethane composition according to claim 7, wherein the alcohol is selected from the group of: monoethylene glycol (MEG), diethylene glycol (DEG), propylene glycol, 1,3-propylene glycol, 1,3-butane diol, 1,4-butane diol, neopentyl glycol, polyols having hydroxyl-numbers between 35 and 400 mg KOH/g polyol, and mixtures thereof.

9. Polyurethane composition according to according to any of the preceding claims comprising one or more additives from the group of: catalysts, surfactants, cell openers, flame retardants, plasticisers, propellants.

10. Polyurethane composition according to claim 9, wherein the catalyst is selected from the group of: Lewis bases or acids, dimethyl aminoethoxyethanol (DMEE), di-morpholino diethyl ether (DMDEE), or mixtures thereof, and wherein the flame-retardant is selected from the group of: monochlorinated mono-methyl ester of castor oil, triethyl phosphate TEP-Z, tris (1-chlor-2-propyl) phosphate (TCPP), bromine comprising fiame-retardants like bromine aliphatic polyether diol,

11. Polyurethane composition according to claim 9 - 10, wherein the surfactant is selected from the group of: polyether modified polysiloxanes, and wherein the cell opener is selected from the group of: polybutenes, fluorpolymers preferably polytetrafluoroethylene (PTFE), SAN polyols comprising styrene acrylonitril, and wherein the plasticiser is selected from the group of: chlorinated paraffins, phosphates.

12. Polyurethane composition according to according to any of the preceding claims 9 - 11, wherein the propellant is selected from the group of: propane, butane, isobutene, dimethylether (DME), 1,1-Difluoroethane, 1,1,1,2-tetrafluoroethane, CO₂, N₂O.

13. The use of the polyurethane compositions produced according to any of the preceding claims for the production of one- or two-component adhesives/sealants, or for hot melt adhesives and solvent-less or solvent-containing laminating adhesives, or for assembly foams, potting compounds and rigid, flexible and integral foams.
